Europäisches Patentamt

European Patent Office

Office européen des brevets

(11) Publication number: **0 014 577**
**A1**

# EUROPEAN PATENT APPLICATION

(21) Application number: **80300312.8**

(22) Date of filing: **04.02.80**

(51) Int. Cl.³: **G 01 F 15/06**

(30) Priority: **08.02.79 GB 7904486**
**05.12.79 GB 7941974**

(43) Date of publication of application:
**20.08.80 Bulletin 80/17**

(84) Designated Contracting States:
**AT BE CH DE FR IT LU NL SE**

(71) Applicant: **Dunning, George Ernest**
**57 Kings Drive**
**Hassocks, Sussex(GB)**

(71) Applicant: **Goldstein, Bernard Charles**
**23 Reynolds Close**
**London NW11 7EA(GB)**

(72) Inventor: **Dunning, George Ernest**
**57 Kings Drive**
**Hassocks, Sussex(GB)**

(72) Inventor: **Goldstein, Bernard Charles**
**23 Reynolds Close**
**London NW11 7EA(GB)**

(74) Representative: **Jennings, Roy Alfred et al,**
**GILL, JENNINGS & EVERY 53/64 Chancery Lane**
**London WC2A 1HN(GB)**

(54) Meter with facility for remote reading.

(57) A meter, for example an electricity meter or a gas meter, is provided with a variable resistance device 15 in such a way that the electrical resistance of the device 15 is arranged to vary in proportion to the reading registered by the indicator mechanism 7 of the meter, the device 15 being connected in an open electrical circuit 5a, 5b having a socket 4 located at a position remote from the meter 6 for connecting into the circuit means for measuring the resistance of the device 15. In this way the reading registered by the indicator mechanism 7 of the meter can be determined at the remote position of the socket 4, which in the case of electricity and gas meters can be located on the outside of the premises served by the meters.

Fig.3.

EP 0 014 577 A1

"Meter With Facility For Remote Reading"

This invention relates to reading of meters at positions remote from the location of the meter, and is particularly concerned with the modification of electricity and gas meters so that they can be read from outside the premises on which they are located.

In modern houses and other buildings served by electricity and gas it is common to install the meters, for example in cupboards which are built into an exterior wall of the building, so that they are accessible from outside the building to allow them to be read without the readers having to enter the building. However, there are still many situations where this practice is either not followed or not possible, and there are of course an enormous number of existing properties where the meters are installed inside so that it is necessary for readers to gain access to the premises in order to read the meters. This necessity is time consuming, often frustrating, and sometimes even annoying to the meter reader or the occupier, or both. Furthermore, it is not unknown for this necessity to be used by persons posing as meter readers to gain access to premises for criminal purposes. Consequently, any simple and inexpensive system which will obviate the need for readers to enter premises in order to read gas and electricity meters located on the premises should prove most attractive to everyone concerned.

With this in mind, according to the present invention a meter having an indicator mechanism for indicating the value of the parameter which is measured by the meter is provided with a variable resistance which is arranged so that its resistance varies proportionally to the value registered by the indicating mechanism and which is connected in an open electrical circuit having a position remote from the meter at which the circuit can be closed for the purpose of measuring the resistance of the variable resistance.

Provided the relationship between the variable resistance and the indicating mechanism of the meter is known, the value of the variable resistance as measured at the remote position enables the reading registered by the indicating mechanism to be determined.

Preferably the open circuit comprises a socket at the remote position for receiving the plug of an ohm meter for measuring the resistance of the circuit, and hence the resistance of the variable resistance. In this case the meter can be read simply by plugging a simple ohm meter, for example one of the digital electronic ohm meters which are now commonly available, into the socket, and directly reading the resistance indicated by the meter. Provided the indicating mechanism of the meter and the variable resistance were zeroed at the time of installation, the ohm meter may, if desired, be calibrated to show directly the reading registered on the meter.

In the case of electricity and gas meters installed inside a building, the remote reading socket may be located at any suitable outside location, for example in the lintel or frame of an outside door or window of the building. The installation of the socket and the rest of the circuitry should present no problem in most buildings. The wiring of the open circuit may be contained in a conduit, as is known, in order to prevent tampering or accidental damage to the system.

As already mentioned, the invention has been developed primarily for use with electricity and gas meters, but is nevertheless applicable to other meters, particularly meters which measure quantitatively the consumption of a commodity and in which the indicator mechanism registers the cumulative amount of the commodity consumed. Electricity and gas meters are of course examples of such meters.

When the indicator mechanism of the meter comprises at least one dial having a pointer which is driven to indicate the measured value, the variable resistance is preferably varied by means which is driven by the part of the indicator mechanism which drives the pointer. In the case of electricity and gas meters, it is common for the indicator mechanism to comprise a number of dials, the pointers of which are driven at different rates from eachother by a gear chain so that the pointers, together, indicate the total amount of electricity or gas consumed. In this case the means which varies the variable resistance may be driven by the shaft of the pointer of only one of the dials, for example the dial on which one revolution of the pointer represents ten thousand units.

Preferably the variable resistance comprises a resistance element the resistance of which changes substantially linearly along its length, and a movable contact which is moved along the resistance element by the turning of a screw in response to rotation of a pointer in the meter. Suitable resistances of this kind which are commercially available are known as cermet trimmers, and it is a simple matter to modify an existing electricity or gas meter so that the screw of one of these variable resistances is driven by spur gears from the shaft of one of the pointers of the meter. Alternatively the variable resistance device may be provided by a conventional rotary potentiometer in which the movable contact is rotated around the resistance element, the value of that portion of the resistance element which corresponds to the meter reading being measured as a proportion of the resistance of the whole element.

An example of a meter in accordance with the present invention will now be described with reference to the accompanying drawings, in which:-

Figure 1 is a diagrammatic perspective view of the outside corner of a building in which an electricity meter in accordance with the invention is installed, showing the remote reading socket of the meter set into one of the outside walls of the building;

Figure 2 is a diagrammatic front view of the indicator mechanism of the meter showing the dials on which the amount of electricity consumed, as measured by the meter, is registered; and,

Figure 3 is a diagrammatic plan view of the indicator mechanism showing the modification which provides the meter with its remote reading facility.

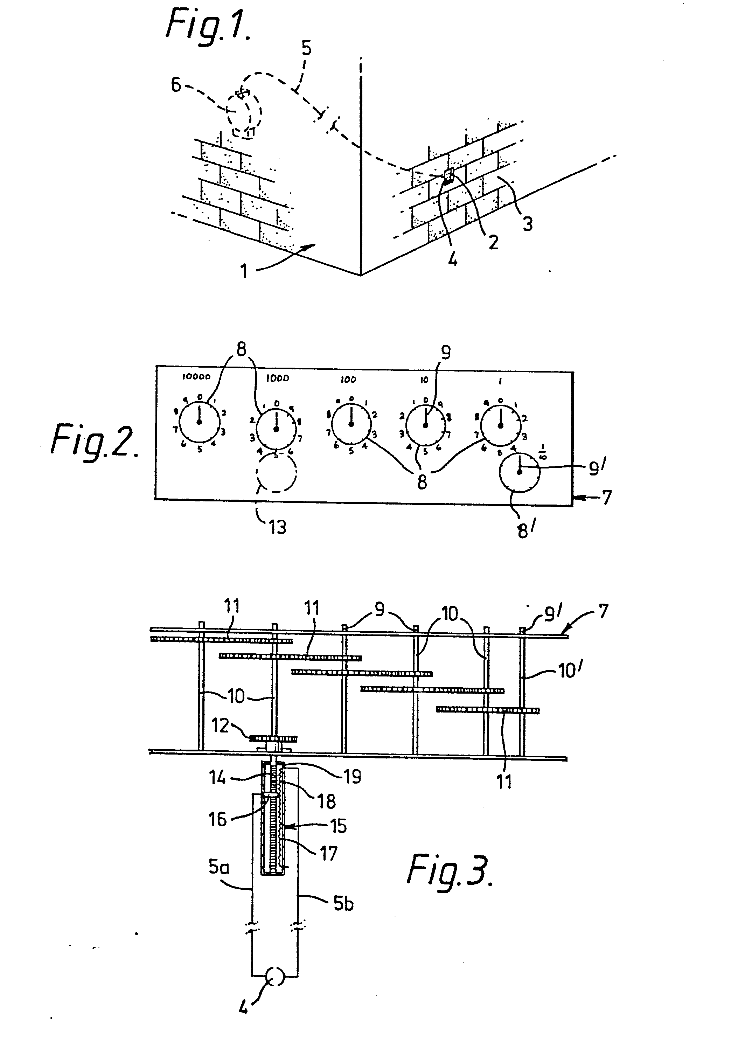

As stated above, Figure 1 shows the outside corner of a building 1, for example a domestic house. Mounted in an opening 2 formed in one of the walls 3 of the building 1 is an electrical socket 4 which is connected (as will be described below in more detail) by wiring, indicated generally at 5, to an electricity meter 6 installed inside the building 1 for the purpose of measuring the amount of electricity used by the occupiers of the building.

The electricity meter 6 is of conventional design having an indicator mechanism 7 (Figures 2 and 3) of the kind which registers the amount of electricity consumed on a series of inter-related dials 8.

Only that part of the meter 6 to which the invention relates, i.e. the indicator mechanism 7, will therefore be described in any detail. As shown, there are six dials 8, each graduated from 1 to 10, and each having a pointer 9 which is driven by a rotary shaft 10 so that the pointer moves around the dial as the driving shaft is rotated. One of the shafts 10' is arranged to be driven by a mechanism (not shown) in response to the power consumption measured by the meter so that one revolution of the shaft 10', and hence one revolution of its pointer 9' around its corresponding dial 8' represents one unit (one kilowatt hour) of electricity. This dial 8' therefore records tenths of units used. The other shafts 10 are driven in succession from the driven shaft 10' through a chain of gears 11 so that each shaft rotates at one tenth of the speed of the shaft from which it is driven. In this way the second dial 8 registers single units consumed, the third dial registers tens of units consumed, and so on to the sixth dial which registers units consumed in tens of thousands.

In order to provide the meter 6 with a remote reading facility in accordance with the invention, one of the shafts 10 (in this case the shaft driving the thousand unit pointer) is provided with an additional gear wheel 12 which is arranged to drive a spur gear 13 which is obscured by the gear wheel 12 in Figure 3 but is indicated roughly in Figure 2. The spur gear 13 is arranged to rotate the screw 14 of a variable resistance device 15 of the type known as a cermet trimmer. The device 15 is mounted on the back of the indicator mechanism 7, and rotation of the screw 14 drives a movable contact 16 along a resistance element 17 to change the length of that portion 18 of the element 17 between the movable contact 16 and one end 19 of the element 17, thereby changing the effective electrical resistance of the device 15.  Provided the resistance of the element 17 varies linearly along its length, it will be appreciated that the rate of change of the electrical resistance of the portion 18 of the element 17 is related to the rate at which electricity is consumed as measured by the meter. Consequently, if the device 15 is set so that there is zero resistance between the movable contact 16 and the end 19 when the pointers 9 of the dials 8 all register zero, the actual resistance of the portion 18 of the element 17 at any time is directly related to the meter reading registered by the pointers 9 of the dials.

The movable contact 16 and the end 19 of the resistance element 17 are connected by wires 5a and 5b (constituting the wiring 5 of Figure 1) to the socket 4 mounted in the outside wall 3, thereby forming an open electrical circuit in which the portion 18 of the resistance element 17 is connected.  The socket 4 is adapted to receive the plug of a suitable ohm meter whereby the open circuit is closed and the resistance of the portion 18 is measured by the ohm meter.  As mentioned above, this resistance value is related to the reading registered by the indicator mechanism 7 of the electricity meter 6, and hence the meter 6 can be read without it being necessary for a reader to enter the building 1 in order to look at the dials 8, as has been necessary in the past. In

that is now necessary is for the reader to plug an ohm meter into the socket 4 and read off the resistance indicated thereby.

If the resistance element 17 of the variable resistance device 15 is not considered sufficiently linear always to give a sufficiently reliable measure of the electricity meter reading, the open circuit may be provided with linearizing circuit elements in accordance with known techniques, for example by incorporating known resistances in parallel with the portion 19 to be measured.

The socket 4 is shown in Figure 1 as being located in the wall of the building, but it will be appreciated that it may be located in any other suitable place as desired, for example in one of the outside door frames. Furthermore, the socket 4 may be provided with a lockable cover (not shown) which can be opened by an authorised meter reader and which will otherwise protect the socket from possible damage. For this purpose also, the wiring 5 inside the building may be housed in a suitable conduit.

It will of course be appreciated that while the present embodiment has been described with reference to an electricity meter, a gas meter having a similar indicator mechanism can be adapted for remote reading in exactly the same way.

- 8 -                                    0014577

## C L A I M S

1.      A meter having an indicator mechanism for indicating the value of the parameter which is measured by the meter, and in addition a variable resistance which is arranged so that its resistance varies proportionally to the value registered by the indicating mechanism and which is connected in an open electrical circuit having a position remote from the meter at which the circuit can be closed for the purpose of measuring the resistance of the variable resistance.

2.      A meter according to claim 1 which measures quantitatively the consumption of a commodity, and in which the indicator mechanism registers the cumulative amount of the commodity consumed.

3.      A meter according to claim 2, in which the indicator mechanism comprises at least one dial having a pointer which is driven to indicate the measured value, and the variable resistance is varied by means which is driven by the part of the indicator mechanism which drives the pointer.

4.      A meter according to claim 3, in which the indicator mechanism comprises a number of dials the pointers of which are driven at different rates from eachother by a gear chain, and the means which varies the variable resistance is driven by the shaft of the pointer of one of the dials.

5.      A meter according to claim 3 or claim 4, in which the variable resistance comprises a resistance element the resistance of which changes substantially linearly along its length, and a movable contact which is moved along the resistance element by the turning of a screw in response to rotation of the pointer.

6.      A meter according to any one of claims 2 to 5, which is an electricity meter.

7.      A meter according to any one of claims 2 to 5, which is a gas meter.

8.      A meter according to claim 6 or claim 7, in which the remote position at which the circuit can be closed to measure the resistance of the variable resistance is accessible from outside the premises on which the meter is located.

9.      A meter according to any one of the preceding claims, in which the open circuit comprises a socket at the remote position for receiving the plug of an ohm meter for measuring the resistance of the circuit, and hence the resistance of the variable resistance.

10.      A meter according to claim 8 or claim 9, in which one of the leads from the variable resistance device to the remote position is common to a secondary open circuit which has a substantially fixed electrical resistance which can be measured at the remote position.

11.      A meter according to claim 10, in which there are two such secondary open circuits, one in which one of the leads of the primary open circuit is common, and one in which the other of the leads of the primary circuit is common.

///

Fig.1.

Fig.2.

Fig.3.

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | G 01 F 15/06 |
| X | US - A - 3 324 437 (D.L. HELLER) <br> * Figures 1-3; column 1, lines 31-50 * | 1-5,7-11 | |
| X | US - A - 3 187 337 (J.L. OTTERLEI) <br> * Figures 1-5 * | 1-7 | |
| X | US - A - 3 153 780 (E.L. ZAUBI) <br> * Figures 1-7 * | 1-10 | TECHNICAL FIELDS SEARCHED (Int.Cl.³) |
| | US - A - 3 027 551 (G.F. LAURIN) <br> * Figures 1-4 * <br> ---- | 1-5,8 9 | G 01 F 15/06 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search | Date of completion of the search | Examiner |
| The Hague | 09-05-1980 | THIBO |

EPO Form 1503.1  06.78